# EUROPÄISCHE PATENTSCHRIFT

(11) **EP 2 253 880 B1**
(45) Veröffentlichungstag und Bekanntmachung des Hinweises auf die Patenterteilung: **26.08.2015**
(21) Anmeldenummer: 10163046.5
(22) Anmeldetag: 18.05.2010
(51) Int. Cl.: F21S 8/10, F21V 7/00, F21W 101/12, F21W 101/14

(54) **Leuchte für Fahrzeuge**
Light for vehicles
Lampe pour véhicules

(30) Priorität: 19.05.2009 DE 102009021983
(43) Veröffentlichungstag der Anmeldung: 24.11.2010
(73) Patentinhaber: Hella KGaA Hueck & Co., 59552 Lippstadt (DE); Volkswagen Aktiengesellschaft, 38436 Wolfsburg (DE)
(72) Erfinder: Mügge, Martin, 59590 Geseke (DE); Jacob, Frank, 38448 Wolfsburg (DE); Ortmann, Janet, 38518 Gifhorn (DE)
(74) Vertreter: Ostermann, Thomas

(56) Entgegenhaltungen:
- EP-A2- 0 587 501
- EP-A2- 1 089 033
- WO-A1-01/49524
- DE-A1- 10 058 659
- DE-A1-102004 020 154
- FR-A1- 2 590 351
- US-A- 5 526 247

## Beschreibung

Die Erfindung betrifft eine Leuchte für Fahrzeuge nach dem Oberbegriff des Patentanspruchs 1.

Signalleuchten für Fahrzeuge, die zur Erzeugung einer Schlusslichtfunktion dienen, müssen so ausgebildet sein, dass die gesetzlichen Anforderungen hinsichtlich der seitlichen Abstrahlung von 80° erfüllt werden. Bei einer Seitenmarkierungslichtfunktion muss ein Teillichtbündel sogar in einem Winkel von 120° zu einer optischen Achse der Leuchte seitlich abgestrahlt werden. Bei Einsatz von LED-Leuchtelementen als Lichtquellen ist die Möglichkeit der seitlichen Abstrahlung sehr begrenzt, so dass in der Regel nur direkt von dem LED-Leuchtelement abgestrahltes Streulicht quer zur optischen Achse desselben genutzt werden kann. Ist dem LED-Leuchtelement jedoch ein Lichtführungsmittel vorgelagert, das die direkte Abstrahlung eines seitlichen Lichtes verhindert, beispielsweise bei einer relativ tiefen Lagerung eines LED-Leuchtelementes in einem als Reflektor ausgebildeten Lichtführungsmittel, kann die seitliche Abstrahlung nur mit zusätzlichen Seitenlichtablenkmitteln bewirkt werden. Aus der DE 10 2004 020 154 A1 ist als Seitenlichtablenkmittel ein Zusatzreflektor vorgesehen, der in Lichtabstrahlrichtung vor dem Lichtführungsmittel (Reflektor) angeordnet ist und sich in einem geneigten Winkel zu der optischen Achse erstreckt. Hierbei erstreckt sich der Zusatzreflektör im Wesentlichen in einem Bereich, der sich bei Projektion in einer senkrecht zur optischen Achse stehenden vorderen Randebene des Reflektors innerhalb desselben befindet. Nachteilig hieran ist jedoch, dass hierdurch die eigentliche Lichtverteilung der Leuchteinheit negativ beeinflusst wird.

Die DE 100 58 659 A1 offenbart eine Leuchte für Fahrzeuge mit einer Mehrzahl von Leuchteinheiten. Diese Leuchteinheiten weisen jeweils eine Lichtquelle und Lichtführungsmittel zur Erzeugung einer vorgegebenen Lichtverteilung auf. In Verlängerung des Lichtführungsmittels sind rückstrahlerähnliche Optikelemente angeordnet.

Allerdings dienen die bekannten Optikelemente jedoch zur Umlenkung eines Teillichtbündels entsprechend des durch das Lichtführungsmittel reflektierten anderen Teillichtbündels. Beide Teillichtbündel werden somit im Wesentlichen in die gleiche Richtung, nämlich in Hauptabstrahlrichtung abgegeben. Aufgabe der vorliegenden Erfindung ist es daher, eine Leuchte für Fahrzeuge derart weiterzubilden, dass auf ein fache Weise eine verbesserte Lichtverteilung unter Einschluss einer seitlichen Lichtabstrahlung gewährleistet ist.

Zur Lösung dieser Aufgabe weist die Erfindung die Merkmale des Patentanspruchs 1 auf.

Vorteilhaft ermöglicht die Erfindung eine abschattungsfreie seitliche Ablenkung eines von einer Leuchteinheit abgestrahlten Lichtbündels, so dass eine Lichtverteilung, wie beispielsweise Schlusslicht, Blinklicht, Seitenmarkierungslicht, mit einer relativ großen Umlenkung eines von einer Lichtquelle der Leuchteinheit abgegebenen Teillichtbündels in seitlicher Richtung, das heißt quer zur optischen Achse der Leuchteinheit, verwirklichbar ist. Vorteilhaft ermöglicht die Erfindung weiterhin ein flächiges Erscheinungsbild, wobei die optischen Komponenten derselben geometrisch voneinander eindeutig abgegrenzt sind. Die erfindungsgemäße Mehrzahl von rückstrahlerähnlichen Optikelementen zur Bildung eines Seitenlichtablenkmittels ist relativ großflächig ausgebildet und kann zur Abgrenzung zwischen unterschiedlichen Teilbereichen der Leuchte genutzt werden.

Nach einer bevorzugten Ausführungsform der Erfindung sind die Mehrzahl von Optikelementen gleichförmig und/oder prismenförmig ausgebildet, wobei eine erste Optikfläche des mindestens einen Optikelements zu einer Leuchteinheit derart stufig ausgerichtet ist, dass das relativ flach auf die erste Optikfläche auftreffende Teillichtbündel in seitlicher Richtung umgelenkt wird. Vorteilhaft weist die Erfindung somit rückstrahlerähnliche Prismenoptikelemente auf, die in Verlängerung eines Teilbereichs eines Randes der Lichtführungsmittel so angeordnet sind, dass zum einen eine wirksame Umlenkung des Teillichtbündels um einen stumpfen Winkel ermöglicht und zum anderen die Abstrahlung eines Hauptlichtbündels in Hauptabstrahlrichtung nicht behindert bzw. beeinträchtigt wird.

Nach einer Weiterbildung der Erfindung erstreckt sich eine Gruppe von Optikelementen entlang einer Reihe von Leuchteinheiten, so dass Teillichtbündel unterschiedlicher Leuchteinheiten auf Optikflächen des gleichen Optikelementes treffen können. Vorteilhaft wird hierdurch eine erhöhte Redundanz geschaffen, so dass bei Ausfall einer oder mehrerer Lichtquellen der Leuchteinheiten eine seitliche Abstrahlung gleichwohl gewährleistet ist.

Nach einer Weiterbildung der Erfindung sind die Optikelemente rechteckförmig, insbesondere sechseckförmig, ausgebildet, wobei eine erste Optikfläche größer ausgebildet ist als eine zweite und/oder dritte Optikfläche desselben Optikelementes. Die jeweils ersten Optikflächen der Optikelemente sind quer zu einer ebenen oder gewölbten Fläche versetzt zueinander angeordnet, wobei die zweiten und dritten Optikflächen die ersten Optikflächen benachbarter Optikelemente verbinden. Die relativ großflächigen ersten Optikflächen ermöglichen eine seitliche Abstrahlung mit einer relativ großen Lichtstärke. Dadurch, dass die zweiten und dritten Optikflächen geneigt angeordnet sind, können die ersten Optikflächen relativ platzsparend und frei von Abschattungen der benachbarten Leuchteinheiten angeordnet werden.

Nach einer Weiterbildung der Erfindung weist die Leuchte eine zentrale Leuchteinheit und eine Mehrzahl von in Reihe angeordneten, kleineren äußeren Leuchteinheiten auf, wobei die Gruppe von Optikelementen auf einer dem äußeren Leuchteinheiten zugewandten Flachseite eine die zentrale Leuchteinheit umgebenden Blende oder Lichtscheibe angeordnet sind. Vorteilhaft dient die Blende bzw. Lichtscheibe als Träger für die Optikelemente, so dass der Bauteileaufwand weiter reduziert werden kann.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Figur 1: eine perspektivische Vorderansicht einer erfindungsgemäßen Leuchte mit einer zentralen Leuchteinheit und einer Mehrzahl von äußeren Leuchteinheiten,
- Figur 2: eine Seitenansicht der Leuchte in Richtung der Fahrzeuglängsmittelebene,
- Figur 3: einen Horizontalschnitt durch die Leuchte,
- Figur 4: eine vergrößerte Darstellung des Horizontalschnitts gemäß Figur 3 in einem Bereich, in dem sich eine Anzahl von Optikelementen zur seitlichen Lichtablenkung erstrecken,

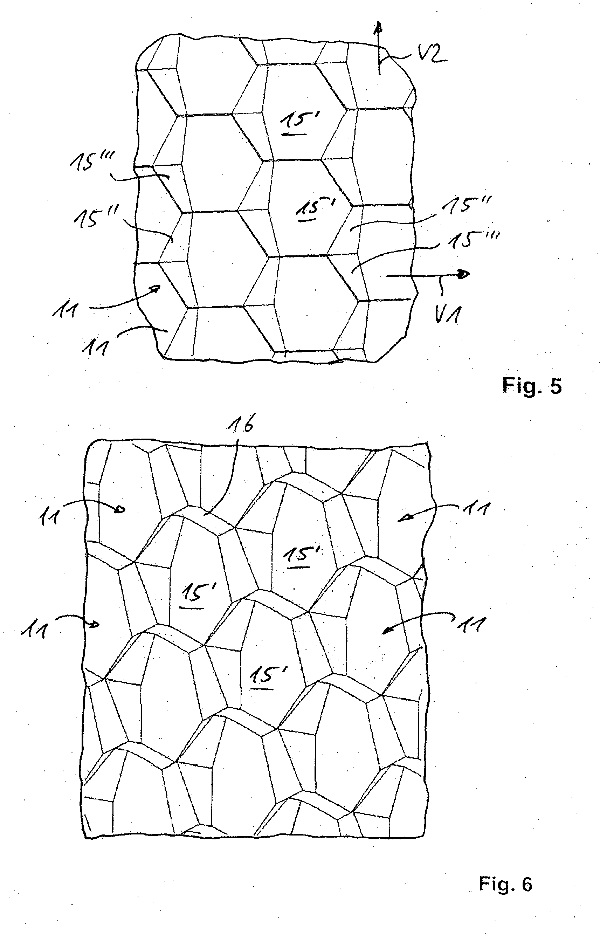

- Figur 5: eine Draufsicht auf eine Mehrzahl von sechseckförmigen Optikelementen,
- Figur 6: eine seitliche Darstellung der Mehrzahl von Optikelementen gemäß Figur 5 und

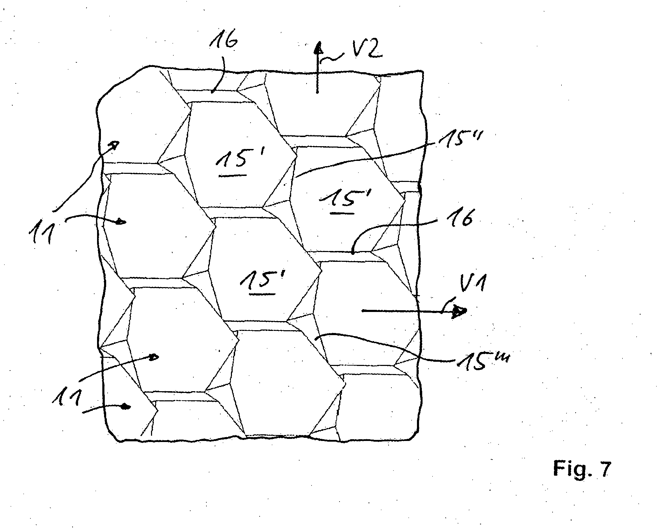

- Figur 7: einen Teilausschnitt der Mehrzahl von Optikelementen in Hauptabstrahlrichtung der Leuchteinheiten gesehen.

Eine Leuchte 1 für Fahrzeuge kann als Signalleuchte in einem Heckbereich eines Fahrzeugs angeordnet sein. Im folgenden Ausführungsbeispiel ist die Signalleuchte als Schluss-/Bremsleuchte ausgebildet zur Erzeugung einer Schlusslichtverteilung und einer Bremslichtverteilung.

Die Leuchte 1 weist eine Mehrzahl von Leuchteinheiten 2 auf, die jeweils als Lichtführungsmittel einen Reflektor 3 sowie eine in einem Scheitelbereich 4 der jeweiligen Reflektoren 3 angeordnete, nicht dargestellte Lichtquellen aufweisen. Eine zentrale Leuchteinheit 2' weist einen relativ großen Reflektor 3' auf. Ring- oder sichelförmig erstrecken sich um die zentrale Leuchteinheit 2' eine Mehrzahl von äußeren Leuchteinheiten 2" , die jeweils relativ kleine Reflektoren 3" aufweisen.

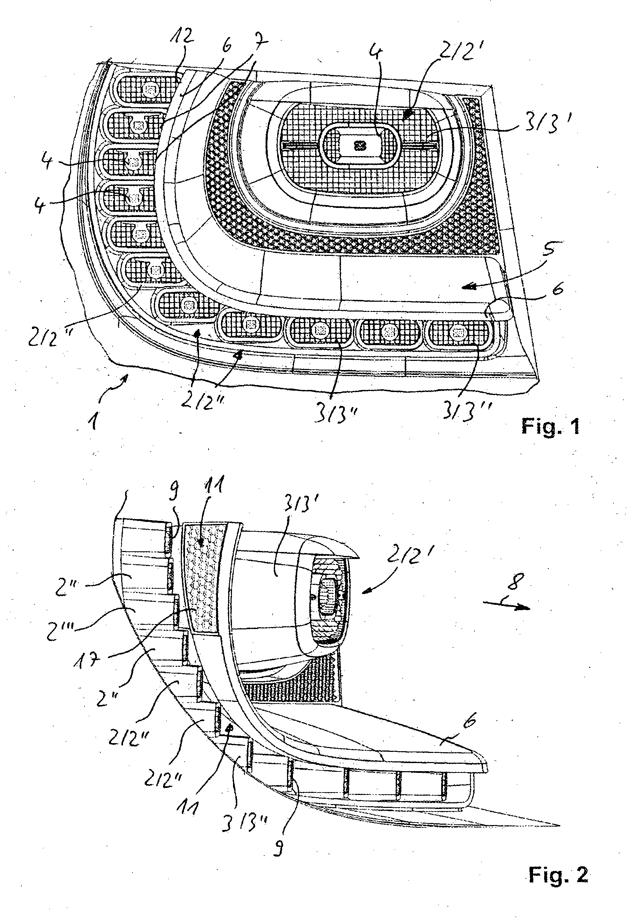

Die zentrale Leuchteinheit 2' ist beabstandet zu den äußeren Leuchteinheiten 2" angeordnet. Die zentrale Leuchteinheit 2' befindet sich in einer zentralen Leuchtenkammer 5, die von einer bogenförmig verlaufenden Blende 6 begrenzt ist. Die Blende 6 folgt dem Verlauf der bogenförmig angeordneten äußeren Leuchteinheiten 2" und schließt sich unmittelbar an einer der zentralen Leuchteinheit 2' zugewandten inneren Seite 7 äußeren Leuchteinheiten 2" an. Wie aus Figur 2 zu ersehen ist, erstreckt sich die Blende 6 bis in einen Bereich, der in Hauptlichtabstrahlrichtung 8 der äußeren Leuchteinheiten 2" vor einem vorderen Rand (Randkante 9) der Reflektoren 3" liegt. Wie aus Figur 2 ersichtlich ist, erstreckt sich der Reflektor 3' der zentralen Leuchteinheit 2' in Hauptlichtabstrahlrichtung 8 vor den Reflektoren 3" der äußeren Leuchteinheiten 2".

Die zentrale Leuchteinheit 2' und die äußeren Leuchteinheiten 2" weisen jeweils optische Achsen 10 auf, die parallel zueinander verlaufen, und zwar in Hauptlichtabstrahlrichtung 8. Zur Erzeugung einer Schluss-/Bremslichtverteilung wird ein nicht dargestelltes Hauptlichtteilbündeln in Hauptlichtabstrahlrichtung 8 abgestrahlt.

Damit auch quer zur optischen Achse 10 in seitlicher Richtung ein Teillichtbündel T abgestrahlt wird, sind als Seitenlichtablenkmittel eine Mehrzahl von rückstrahlerähnlichen Optikelemente 11 in der Blende 6 integriert angeordnet. Die Optikelemente 11 sind auf einer den äußeren Leuchteinheiten 2" zugewandten Längsseite (Flachseite) der Blende 6 angeordnet. Wie insbesondere aus Figur 1 zu ersehen ist, erstreckt sich die Blende 6 mit den Optikelementen 11 in Verlängerung einer inneren Randfläche 12 der Reflektoren 3". Die innere Randfläche 12 ist der Fahrzeuglängsachse zugewandt. Vorzugsweise erstreckt sich die Blende 6 parallel zur optischen Achse 10, wobei ein hinterer Rand 13 der Blende 6 unmittelbar an dem inneren vorderen Rand 9 des Reflektors 3" oder beabstandet zu demselben angeordnet ist. Ein vorderer Rand 14 der Blende 6 ist kuppelförmig ausgebildet und deckt die Optikelemente 11 von einer Vorderseite der Leuchte 1 her ab. In Projektion auf eine senkrecht zur optischen Achse 10 stehenden vorderen Randebene R der Reflektoren 3" erstrecken sich die Optikelemente 11 im Bereich der vorderen Randkante 9 und/oder außerhalb der Randkante 9 des Reflektors 3", so dass die vordere Randöffnung der Reflektoren 3" jeweils im Wesentlichen frei von Abschattungen ist.

Die Optikelemente 11 bestehen jeweils aus einer Anzahl von in einem Winkel zueinander stehenden Optikflächen 15, die rückstrahlerähnlich erhaben aus einer Erstreckungsebene E der Blende 6 abragen.

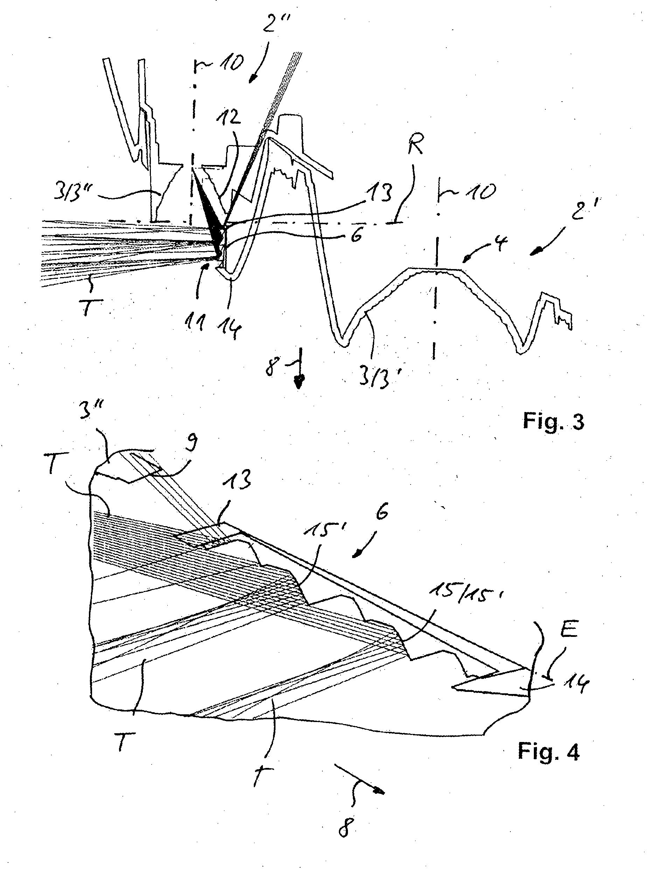

Die Optikelemente 11 sind gleichförmig und prismenförmig ausgebildet. Im vorliegenden Ausführungsbeispiel sind die Optikelemente 11 sechseckförmig ausgebildet, wobei sie jeweils eine relativ große erste Optikfläche 15' aufweisen, wobei die ersten Optikflächen 15' der Mehrzahl von Optikelementen 11 jeweils parallel versetzt zueinander angeordnet sind. Die ersten Optikflächen 15' benachbarter Optikelemente 11 sind durch eine zweite Optikfläche 15" und eine dritten Optikfläche 15"' in einer ersten Verlaufsrichtung V1 miteinander verbunden. Die ersten und zweiten Optikflächen 15" bzw. 15"' sind geneigt zu der benachbarten ersten Optikfläche 15' angeordnet. In einer senkrecht zur Verlaufsrichtung V1 verlaufenden Verlaufsrichtung V2 sind die ersten Optikflächen 15' durch Verbindungsflächen 16 miteinander verbunden, die keine optische Wirkung haben. Die Verbindungsflächen 16 erstrecken sich in einem steileren Winkel von den ersten Optikflächen 15' als die zweiten und dritten Optikflächen 15" bzw. 15"'. Die Optikflächen 15 (erste Optikfläche 15', zweite Optikfläche 15", dritte Optikfläche 15"') sind somit stufig zueinander angeordnet, so dass das von der in Hauptlichtabstrahlrichtung 8 hinter dem entsprechenden Bereich dieser Optikflächen 15 abgestrahlte Teillichtbündel T zumindest flach auf die erste Optikfläche 15' in seitlicher Richtung umgelenkt wird. Wie aus Figur 4 zu ersehen ist, sind die in Hauptlichtabstrahlrichtung 8 hintereinander angeordneten ersten Optikflächen 15' in Richtung der optischen Achse 10 der denselben zugeordneten äußeren Leuchteinheit 2" versetzt zueinander angeordnet.

Die Optikelemente 11 sind so ausgelegt, dass eine Gruppe 17 von Optikelementen 11, die der in Hauptlichtabstrahlrichtung 8 hinter derselben angeordneten äußeren Leuchteinheit 2"' zugeordnet ist, auch von benachbarten Leuchteinheiten 2" abgestrahltes Licht umlenkt, so dass bei Ausfall der Leuchteinheit 2"' stets eine flächige und homogene Umlenkung in seitlicher Richtung gewährleistet ist.

Im vorliegenden Ausführungsbeispiel sind die ersten Optikflächen 15' der Optikelemente 11 eben ausgebildet. Alternativ können die ersten Optikflächen 15' sowie die weiteren Optikflächen 15", 15"' auch konkav-, konvex-, kugel-, torus- und/oder parabelförmig ausgebildet sein. Alternativ können die Optikflächen 15 auch als Freiformflächen ausgebildet sein.

Die Lichtquellen können als Glühlampen oder als LED-Leuchtelemente ausgebildet sein. Als Lichtführungsmittel können neben einem Reflektor auch Linsen, insbesondere Fresnellinsen, oder Lichtleitelemente der Lichtquelle vorgelagert sein.

Zumindest im Bereich der Optikflächen 15 ist die Blende 6 vorzugsweise bedampft ausgebildet, um die erforderliche Spiegelfläche zu erhalten. Nach einer alternativen Ausführungsform können die Optikelemente 11 auch in einer transparenten Zusatzlichtscheibe integriert sein. Besteht das Material der Blende bzw. Zusatzlichtscheibe aus einem gut reflektierenden Material, beispielsweise weißem Kunststoff, kann auf eine Bedampfung verzichtet werden.

Nach einer alternativen Ausführungsform können die Optikelemente 11 auch als rechteckförmige oder als konzentrische, stäbchenförmige Elemente ausgebildet sein.

Nach einer nicht dargestellten Ausführungsform der Erfindung können die Optikelemente 11 auch derart angeordnet sein, dass das Teillichtbündel T zur Erzeugung einer Seitenmarkierungslichtes bis zu 120° bezüglich der optischen Achse 10 umgelenkt wird.

Die reflektorähnlichen Optikelemente 11 sind somit im Wesentlichen in Hauptlichtabstrahlrichtung 8 vor den Reflektoren 2" angeordnet, so dass das von den Leuchteinheiten 2" her einfallende Teillichtbündel T an den Optikflächen 15 der Optikelemente 11 in seitlicher Richtung reflektiert wird zur Erfüllung der seitlichen Lichtstärken für Signalfunktionen und/oder für Seitenmarkierungslichtfunktionen.

## Patentansprüche

1. Leuchte für Fahrzeuge mit einer Mehrzahl von Leuchteinheiten (2, 2', 2"), die jeweils eine Licht abstrahlende Lichtquelle einerseits und Lichtführungsmittel (3, 3', 3") andererseits zur Erzeugung einer vorgegebenen Lichtverteilung aufweisen, wobei optische Achsen (10) der Leuchteinheiten (2, 2', 2") parallel zueinander verlaufen, wobei ein Hauptlichtteilbündel in einer zur optischen Achse (10) parallelen Hauptabstrahlrichtung (8) abgestrahlt wird und wobei den Leuchteinheiten (2, 2', 2") in der Hauptlichtabstrahlrichtung (8) vor den Lichtführungsmitteln (3, 3") angeordnete Seitenlichtablenkmittel (11) zugeordnet sind zur Umlenkung eines Teillichtbündels (T) in seitlicher Richtung quer zu der optischen Achse (10), **dadurch gekennzeichnet, dass** sich die Seitenlichtablenkmittel (11) in Verlängerung eines Randes des Lichtführungsmittels (3, 3") erstrecken und durch eine Mehrzahl von ruckstrahlerähnlichen . Optikelementen (11) gebildet sind, die sich in Projektion auf eine senkrecht zur optischen Achse (10) stehenden vorderen Randebene (R) des Lichtführungsmittels (3, 3") außerhalb der vorderen Randkante (9) des Lichtführungsmittels (3, 3") erstrecken und die jeweils eine Anzahl von in einem Winkel zueinander stehende Optikflächen (15, 15', 15", 15"') aufweisen, mittels derer das Teillichtbündel (T) in seitlicher Richtung umgelenkt wird.

2. Leuchte nach Anspruch 1, **dadurch gekennzeichnet, dass** die Optikelemente (11) gleichförmig und/oder prismenförmig ausgebildet sind, wobei erste Optikflächen (15') der Optikelemente (11) derart stufig ausgerichtet sind, dass zumindest das von der in Hauptlichtabstrahlrichtung (8) hinten angeordnete Leuchteinheit (2") abgestrahlte Teillichtbündel (T) in seitlicher Richtung umgelenkt wird.

3. Leuchte nach Anspruch 2, **dadurch gekennzeichnet, dass** die Optikelemente (11) eine zweite Optikfläche (15") und/oder eine dritte Optikfläche (15"') aufweisen, so dass ein Teil des von in Hauptlichtabstrahlrichtung (8) hinter denselben angeordneten Leuchteinheit (2") abgestrahlte Licht und/oder benachbarter Leuchteinheiten (2") in seitlicher Richtung umgelenkt wird.

4. Leuchte nach einem der Ansprüche 1 bis 3, **dadurch gekennzeichnet, dass** sich eine Gruppe (17) von Optikelementen (11) entlang von einer Fahrzeuglängsachse zugewandten Seiten der Leuchteinheiten (2") erstreckt, derart, dass das Teillichtbündel (T) unterschiedlicher Leuchteinheiten (2") auf die Optikflächen (15) des gleichen Optikelementes (11) treffen und in seitlicher Richtung reflektiert werden.

5. Leuchte nach Anspruch 3 oder 4, **dadurch gekennzeichnet, dass** die Optikelemente (11) sechseckförmig ausgebildet sind, wobei die erste Optikfläche (15') größer ist als die winkelig zu derselben angeordneten zweiten Optikfläche (15") und/oder einer winkelig zu der ersten Optikfläche (15') angeordneten dritten Optikfläche (15"').

6. Leuchte nach einem der Ansprüche 1 bis 5, **dadurch gekennzeichnet, dass** eine zentrale Leuchteinheit (2') und eine Mehrzahl von in einer Reihe angeordneten äußeren Leuchteinheiten (2") vorgesehen sind, wobei die Gruppe von Optikelementen (11) auf einer den äußeren Leüchteinheiten (2") zugewandten Flachseite einer die zentrale Leuchteinheit (2') umgebenden Blende (6) angeordnet sind.

7. Leuchte nach einem der Ansprüche 2 bis 6, **dadurch gekennzeichnet, dass** die erste Optikfläche (15') des Optikelementes (11) eben oder konvexförmig oder konkavförmig oder kugelförmig oder torusförmig oder parabelförmig oder als Freiformfläche ausgebildet ist.

8. Leuchte nach einem der Ansprüche 1 bis 7, **dadurch gekennzeichnet, dass** das Lichtführungsmittel als ein Reflektor (3") oder als ein Lichtleiter oder als eine Linse, insbesondere als eine Fresnellinse, ausgebildet ist.

9. Leuchte nach einem der Ansprüche 1 bis 8, **dadurch gekennzeichnet, dass** die Lichtquelle als eine Glühlampe oder als ein LED-Leuchtelement ausgebildet ist.

10. Leuchte nach Anspruch4, **dadurch gekennzeichnet, dass** die Gruppe (17) von rückstrahlerähnlichen Optikelementen (11) derart in Hauptlichtabstrahlrichtung (8) vor mindestens einem Lichtführungsmittel angeordnet ist, dass das auf sie treffende Teillichtbündel (T) in seitlicher Richtung reflektiert wird zur Erfüllung der seitlichen Lichtstärken für Signalfunktionen und/oder als für Seitenmarkierungslichtfunktionen.

## Claims

1. A light for vehicles having a plurality of light units (2, 2', 2") which each have a light-emitting light source on the one hand and light guiding means (3, 3', 3") on the other hand for generating a predetermined light distribution, wherein optical axes (10) of the light units (2, 2', 2") extend parallel to each other, wherein a partial main light beam is emitted in a main beam direction (8) parallel to the optical axis (10) and wherein lateral light deflecting means (11) arranged in the main light beam direction (8) before the light guiding means (3, 3") are assigned to the light units (2, 2', 2"), in order to deflect a partial light beam (T) in a lateral direction transversely to the optical axis (10), **characterized in that** the lateral light deflecting means (11) extend in extension of an edge of the light guiding means (3, 3") and are formed by a plurality of rear reflector-like optical elements (11) which extend projecting towards a front boundary plane (R) of the light guiding means (3, 3") which is located vertical to the optical axis (10) outside the front boundary edge (9) of the light guiding means (3, 3"), and which each have a number of optical surfaces (15, 15', 15", 15"') located at an angle to each other, by means of which the partial light beam (T) is deflected in a lateral direction.

2. The light according to Claim 1, **characterized in that** the optical elements (11) are configured uniformly and/or prismatically, wherein first optical surfaces (15') of the optical elements (11) are aligned stepped such that at least the partial light beam (T) emitted by the light unit (2") located at the rear in the main light beam direction (8) is deflected in a lateral direction.

3. The light according to Claim 2, **characterized in that** the optical elements (11) have a second optical surface (15") and/or a third optical surface (15"'), so that a part of the light emitted in the main light beam direction (8) by the light unit (2") arranged behind the same and/or by adjacent light units (2") is deflected in a lateral direction.

4. The light according to any one of Claims 1 to 3, **characterized in that** a group (17) of optical elements (11) extends along sides of the light units (2") facing a longitudinal axis of the vehicle such that the partial light beams (T) of different light units (2") are incident on the optical surfaces (15) of the same optical element (11) and are reflected in a lateral direction.

5. The light according to Claim 3 or 4, **characterized in that** the optical elements (11) are configured hexagonally, wherein the first optical surface (15') is greater than the second optical surface (15") arranged at an angle to the same and/or a third optical surface (15'") arranged at an angle to the first optical surface (15').

6. The light according to any one of Claims 1 to 5, **characterized in that** a central light unit (2') and a plurality of external light units (2") arranged in a row are provided, wherein the group of optical elements (11) is arranged on a flat side of a shutter (6) surrounding the central light unit (2') facing the external light units (2").

7. The light according to any one of Claims 2 to 6, **characterized in that** the first optical surface (15') of the optical element (11) is configured such that it is flat or convex or concave or spherical or toroidal or parabolic or as a free-form surface.

8. The light according to any one of Claims 1 to 7, **characterized in that** the light guiding means is configured as a reflector (3") or as an optical fiber or as a lens, in particular as a Fresnel lens.

9. The light according to any one of Claims 1 to 8, **characterized in that** the light source is configured as a light bulb or as an LED light element.

10. The light according to Claim 4, **characterized in that** the group (17) of rear reflector-like optical elements (11) is arranged in the main light beam direction (8) before at least one light guiding means such that the partial light beam (T) incident on them is reflected in a lateral direction, in order to suffuse the lateral light intensities for signal functions and/or for side marking light functions.

## Revendications

1. Lampe pour véhicules automobiles qui comprend une pluralité d'unités d'éclairage (2, 2', 2"), qui sont dotées chacune d'une source de lumière rayonnante, d'une part, et de moyens de guidage de lumière (3, 3', 3"}, d'autre part, afin de générer une répartition de lumière prédéterminée, sachant que des axes optiques (10) des unités d'éclairage (2, 2', 2") s'étendent parallèlement les uns par rapport aux autres, sachant qu'un principal faisceau lumineux partiel rayonne dans une principale direction de rayonnement (8) parallèle à l'axe optique (10) et sachant qu'aux unités d'éclairage (2, 2', 2") sont associés des éléments de déviation de lumière latérale (11) qui sont disposés, dans la principale direction de rayonnement (8), en amont des moyens de guidage de lumière (3, 3"}, pour faire dévier un faisceau lumineux partiel (T) dans la direction latérale, transversalement par rapport à l'axe optique (10), **caractérisée en ce que** les moyens de déviation de lumière latérale (11) s'étendent en prolongement d'un bord du moyen de guidage de lumière (3, 3"} et sont formés par une pluralité d*éléments optiques (11), analogues à des réflecteurs, qui s'étendent en projection, sur un plan marginal avant (R) du moyen de guidage de lumière (3, 3"} perpendiculaire à l'axe optique (10), en dehors du bord avant (9) du moyen de guidage de lumière (3, 3"}, et qui présentent chacun plusieurs surfaces optiques (15, 15', 15", 15"'), qui sont disposées angulairement les unes par rapport aux autres et au moyen desquelles le faisceau lumineux partiel (T) est dévié dans la direction latérale.

2. Lampe selon la revendication 1, **caractérisée en ce que** les éléments optiques (11) sont réalisés uniformément et / ou en forme de prismes, sachant que les premières surfaces optiques (15') des éléments optiques (11) sont agencées en gradin de telle manière qu'au moins le faisceau lumineux partiel (T) émis par l'unité d'éclairage (2") disposée en derrière, dans la principale direction de rayonnement (8) dévie la direction latérale.

3. Lampe selon la revendication 2, **caractérisée en ce que** les éléments optiques (11) sont dotés d'une deuxième surface optique (15") et / ou d'une troisième surface optique (15"') de telle manière qu'une partie de la lumière émanant de l'unité d'éclairage (2") disposée derrière celle-ci dans la principale direction de rayonnement (8) et / ou des unités d'éclairage (2") voisines dévie dans la direction latérale.

4. Lampe selon l'une des revendications 1 à 3, **caractérisée en ce qu'**un groupe (17) d'éléments optiques (11) s'étend le long d'un côté des unités d'éclairage (2") orienté vers l'axe longitudinal du véhicule automobile, de telle manière que le faisceau lumineux partiel (T) de différentes unités d'éclairage (2") tombe sur les surfaces optiques (15) du même élément optique (11) et soit réfléchi dans la direction latérale.

5. Lampe selon la revendication 3 ou 4, **caractérisée en ce que** les éléments optiques (11) sont configurés en forme d'hexagones, sachant que la première surface optique (15') est plus grande que la deuxième surface optique (15") disposée angulairement par rapport à celle-ci, et / ou qu'une troisième surface optique (15"') disposée angulairement par rapport à la première surface optique (15').

6. Lampe selon l'une des revendications 1 à 5, **caractérisée en ce que** sont prévues une unité d'éclairage centrale (2') et une pluralité d'unités d'éclairage (2"), qui sont disposées en une rangée, sachant que le groupe d'éléments optiques (11) est agencé sur une face plane, dirigée vers les unités d'éclairage extérieures (2"), d'un écran (6) qui entoure l'unité d'éclairage centrale (2')

7. Lampe selon l'une des revendications 2 à 6, **caractérisée en ce que** la première surface optique (15') de L'élément optique (11) est convexe ou concave ou sphérique ou parabolique ou de forme libre.

8. Lampe selon l'une des revendications 1 à 7, **caractérisée en ce que** le moyen de guidage de lumière est réalisé sous la forme d'un réflecteur (3") ou d'un conducteur de lumière ou d'une lentille, en particulier sous la forme d'une lentille de Fresnel.

9. Lampe selon l'une des revendications 1 à 8, **caractérisée en ce que** la source de lumière est réalisée sous la forme d'une Lampe à incandescence ou sous la forme d'un élément de lampe LED.

10. Lampe selon la revendication 4, **caractérisée en ce que** le groupe (17) d'éléments optiques, analogues à des réflecteurs (11) est disposé dans la principale direction de rayonnement (8), en amont d'au moins un moyen de guidage de lumière, de telle manière que le faisceau lumineux partiel (T), qui les frappent, soit réfléchi dans la direction latérale afin de réaliser les intensités lumineuses latérales pour les fonctions de signalisation et / ou pour les fonctions d'éclairage de marquage latéral.
